# FASCICULE DE BREVET EUROPEEN

(11) **EP 4 454 058 B1**
(45) Date de publication et mention de la délivrance du brevet: **14.01.2026**
(21) Numéro de dépôt: 22840623.7
(22) Date de dépôt: 19.12.2022
(51) Int. Cl.: H01M 50/271, H01M 50/209, H01M 50/296, H01M 50/538, H01M 10/0587

(54) **ELÉMENT DE BATTERIE ET PROCÉDÉ DE FABRICATION ASSOCIÉ**
BATTERIEZELLE UND ZUGEHÖRIGES HERSTELLUNGSVERFAHREN
BATTERY CELL AND ASSOCIATED MANUFACTURING METHOD

(30) Priorité: 21.12.2021 FR 2114073
(43) Date de publication de la demande: 30.10.2024
(73) Titulaire: SAFT, 92300 Levallois-Perret (FR)
(72) Inventeur: BARDIAU, Maxence, 33185 Le Haillan (FR); BLONZ, Valentin, 33110 Le Bouscat (FR)
(74) Mandataire: Lavoix
(86) Numéro de dépôt international: PCT/EP2022/086723
(87) Numéro de publication internationale: WO 2023/117952

(56) Documents cités:
- WO-A1-2021/024629
- CN-A- 106 654 337
- CN-A- 111 801 812

## Description

La présente invention concerne un élément de batterie comprenant :
- un godet délimitant un volume intérieur et une ouverture supérieure d'accès au volume intérieur s'étendant sensiblement dans un premier plan,
- un couvercle fixé sur le godet et fermant le volume intérieur,
- au moins un premier faisceau électrochimique reçu au moins en partie dans le volume intérieur, le premier faisceau électrochimique comprenant une pluralité d'empilements, chaque empilement comprenant une électrode de première polarité, une électrode de deuxième polarité et un séparateur interposé entre l'électrode de première polarité et l'électrode de deuxième polarité, chacune des électrodes de première polarité et de deuxième polarité comprenant une languette de connexion électrique,
- au moins un collecteur de première polarité.

Cette invention est particulièrement applicable aux éléments de batterie électrochimiques de format prismatique notamment les éléments lithium-ion.

Chaque électrode de première polarité, par exemple positive, et électrode de deuxième polarité, par exemple négative, comporte un support métallique, par exemple en aluminium ou en cuivre, sur lequel une couche comportant la matière active est déposée. La couche comportant la matière active de l'électrode négative est placée en regard de celle de l'électrode positive, afin d'optimiser au mieux les échanges d'électrons et les performances électrochimiques de l'élément.

Pour récupérer la tension et le courant, le faisceau électrochimique est connecté dans sa partie haute, via les languettes de connexion électrique des électrodes de première polarité et de deuxième polarité, aux bornes de l'élément prismatique par l'intermédiaire d'une soudure sur des connexions métalliques.

Lors de la fermeture du godet de l'élément, afin de maximiser l'espace occupé par de la matière active dans l'élément, et, la capacité électrique de l'élément, le couvercle qui ferme l'élément est susceptible d'exercer une contrainte sur les languettes des électrodes.

Celles-ci se replient donc à l'intérieur du volume intérieur du godet, vers l'empilement et adoptent généralement une configuration courbée. Dans cette configuration, les languettes des électrodes positives qui ne sont pas enduites de la couche comportant la matière active se disposent au voisinage des supports des électrodes négatives. De la même manière, les languettes des électrodes négatives qui ne sont pas enduites de la couche comportant la matière active se disposent au voisinage des supports des électrodes positives.

Normalement, le séparateur disposé entre chaque paire d'électrodes positives et négatives en regard s'interpose entre chaque languette d'une électrode positive et l'électrode négative en regard, et entre chaque languette d'une électrode négative et l'électrode positive en regard.

Cependant, compte tenu de la compression au sein de l'élément et de la présence de la couche comportant la matière active jusqu'au bord supérieur de chaque électrode, il subsiste un risque substantiel de court-circuit en cas de mauvaise isolation, notamment si le séparateur ne forme pas écran, ou/et si les connexions électriques sont très tassées. Ceci réduit la fiabilité de l'élément de batterie.

Par ailleurs, dans ce type d'élément de batterie, la zone de pliage des languettes de connexion occupe un espace important dans le volume intérieur du godet limitant les dimensions des électrodes à l'intérieur du godet et par conséquent la capacité de l'élément de batterie.

Un but de l'invention est donc de fournir un élément de batterie simple à fabriquer qui minimise le risque de courts-circuits lors de sa fabrication tout en permettant une optimisation de la capacité électrique de l'élément.

A cet effet, l'invention a pour objet un élément de batterie, tel que défini plus haut, dans lequel le collecteur de première polarité est solidaire du couvercle et définit au moins une première surface de soudage située à l'écart du volume intérieur du godet, les languettes de connexion électrique des électrodes de première polarité étant soudées sur ladite première surface de soudage,
le couvercle comprenant une partie supérieure délimitant au moins une première ouverture traversante située en regard de la première surface de soudage selon une direction d'élévation,
l'élément de batterie comprenant en outre un dispositif d'étanchéité fixé sur le couvercle et destiné à fermer la première ouverture traversante de manière étanche.

Ainsi, la fabrication de l'élément de batterie est facilitée puisque le nombre de constituants qui composent l'élément de batterie est réduit. Le fait de déporter la soudure entre le collecteur de première polarité et les languettes de connexion électrique à l'extérieur du godet permet d'augmenter les dimensions des supports des électrodes présentes dans le volume intérieur du godet et par conséquent, d'augmenter la capacité de l'élément de batterie. De plus, la fabrication de l'élément de batterie est simplifiée et plus fiable puisque les soudures des languettes de connexion électrique sur le collecteur sont réalisées après la mise en place du couvercle sur le godet, au travers de la première ouverture traversante. Le risque de courts-circuits est également réduit car le rayon de pliage des languettes de connexion électrique est augmenté.

L'élément de batterie selon l'invention peut comprendre une ou plusieurs des caractéristiques suivantes, prise(s) isolément ou selon toutes les combinaisons techniquement possibles :
- le couvercle définit un espace intérieur en communication avec le volume intérieur du godet, la première surface de soudage étant située dans l'espace intérieur du couvercle ;
- la première surface de soudage s'étend dans un plan sensiblement parallèle au premier plan ;
- la première surface de soudage s'étend dans un plan formant un angle avec le premier plan compris entre 30° et 60°, avantageusement sensiblement égal à 45°.
- le collecteur de première polarité comprend une portion de connexion et une borne de raccordement reliée à la portion de connexion, la portion de connexion définissant la première surface de soudage, la borne de raccordement définissant au moins une surface libre orientée vers l'extérieur du volume intérieur ;
- la partie supérieure du couvercle est surmoulée sur le collecteur de première polarité ;
- le dispositif d'étanchéité comprend au moins un premier volet d'étanchéité monté sur la partie supérieure du couvercle, et déplaçable par rapport à la partie supérieure du couvercle entre une position ouverte dans laquelle le premier volet d'étanchéité est disposé à l'écart de la première ouverture traversante, et une position fermée dans laquelle le premier volet d'étanchéité ferme la première ouverture traversante de manière étanche ;
- le couvercle comprend une structure de base solidaire de la partie supérieure du couvercle, le dispositif d'étanchéité comprend un capot supérieur fixé de manière étanche sur la structure de base et fermant au moins la première ouverture traversante ;
- le capot supérieur définit au moins deux orifices traversants en communication avec le volume intérieur du godet ;
- le dispositif d'étanchéité comprend au moins une première couche de matériau isolant fixée sur une face inférieure du capot supérieur et disposée en regard de la première surface de soudage selon la direction d'élévation ;
- le couvercle comprend au moins une première languette isolante déplaçable par rapport à la partie supérieure du couvercle entre une position ouverte dans laquelle la première languette isolante est à l'écart de la première ouverture traversante, et une position fermée dans laquelle la première languette isolante est située en regard de la première ouverture traversante selon la direction d'élévation ;
- le couvercle comprend un organe de butée en appui sur le premier faisceau électrochimique ; et
- l'élément de batterie comprend un collecteur de deuxième polarité, le collecteur de première polarité étant solidaire du couvercle et définissant au moins une première surface de soudage située à l'écart du volume intérieur du godet, les languettes de connexion électrique des électrodes de deuxième polarité étant soudées sur ladite première surface de soudage.

L'invention a également pour objet un procédé de fabrication d'un élément de batterie tel que décrit ci-dessus, le procédé comprenant :
- disposer le faisceau électrochimique à l'intérieur du volume intérieur du godet,
- fixer le collecteur de première polarité sur la partie supérieure du couvercle,
- souder la partie supérieure du couvercle sur le godet,
- souder les languettes de connexion électrique des électrodes de première polarité sur la première surface de soudage du collecteur de première polarité, et
- fixer le dispositif d'étanchéité sur le couvercle pour fermer la première ouverture traversante de manière étanche.

L'invention sera mieux comprise à la lecture de la description qui va suivre, donnée uniquement à titre d'exemple, et faite en référence aux dessins annexés, sur lesquels :
- les figures 1 et 2 sont des vues en perspective d'un élément de batterie selon un premier mode de réalisation de l'invention,
- la figure 3 est une section selon une direction longitudinale de la partie supérieure de l'élément de batterie de la figure 2,
- la figure 4 est une vue en perspective d'un collecteur de l'élément de batterie des figures 1 et 2,
- la figure 5 est une section selon une direction transversale de la partie supérieure de l'élément de batterie des figures 1 et 2,
- la figure 6 est une vue en perspective d'un élément de batterie selon un deuxième mode de réalisation de l'invention,
- la figure 7 est une vue en perspective de la partie supérieure de l'élément de batterie de la figure 6 sans le capot supérieur,
- la figure 8 est une section selon une direction transversale de la partie supérieure de l'élément de batterie de la figure 6,
- les figures 9 à 11 sont des vues en perspectives de différents éléments du couvercle de l'élément de batterie de la figure 6, et
- les figures 12 et 13 sont des vues en perspectives du couvercle d'un élément de batterie selon un troisième mode de réalisation de l'invention.

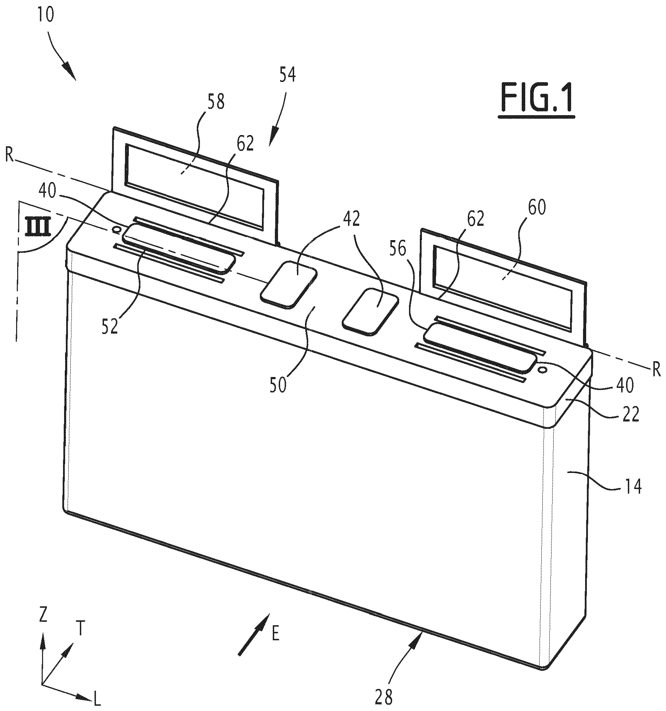

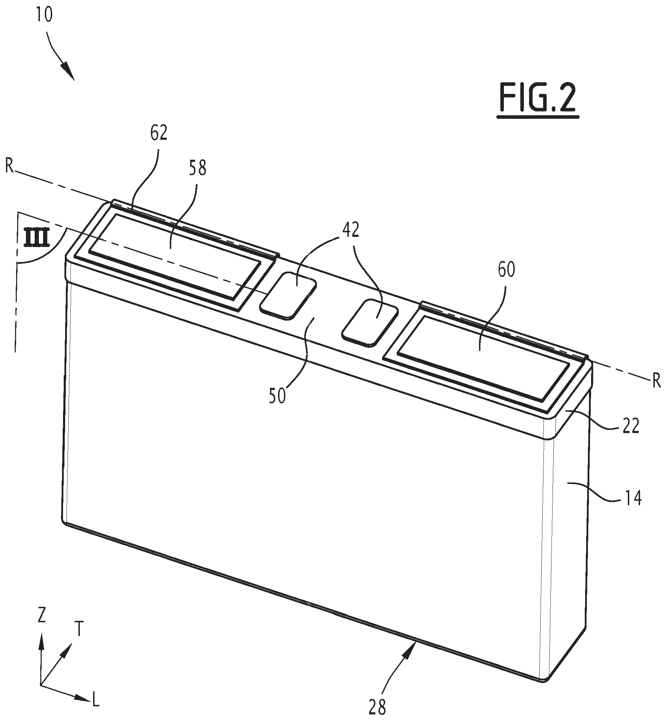

Les figures 1 et 2 illustrent un élément 10 prismatique d'une batterie selon un premier mode de réalisation.

Dans la suite de la description, les orientations sont définies en référence à l'élément de batterie 10 posé sur une surface horizontale. La direction longitudinale L correspond à la direction principale d'élongation de l'élément de batterie 10. La direction transversale T est sensiblement perpendiculaire à la direction longitudinale L et correspond sensiblement à la direction d'empilement E des empilements d'électrodes. La direction d'élévation Z est sensiblement perpendiculaire à la direction longitudinale L et à la direction transversale T. Elle est sensiblement confondue avec la direction verticale lorsque l'élément de batterie 10 est posé sur une surface horizontale. Les termes « supérieur » et « inférieur » sont utilisés en référence à la direction d'élévation Z.

La batterie est une batterie électrochimique telle qu'utilisée habituellement dans les véhicules ferroviaires ou dans les aéronefs. Toutefois, d'autres domaines d'application de la batterie sont envisageables, tels que les véhicules automobiles, le stockage d'énergie ou la mobilité électrique.

L'élément de batterie 10 comporte un carter ou godet 14 définissant un volume intérieur 16 et au moins un premier faisceau électrochimique 18 disposé dans le volume intérieur 16 du godet 14.

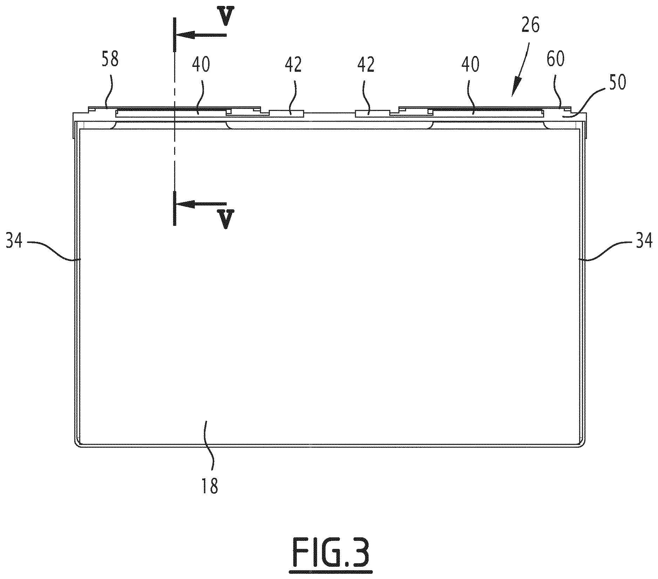

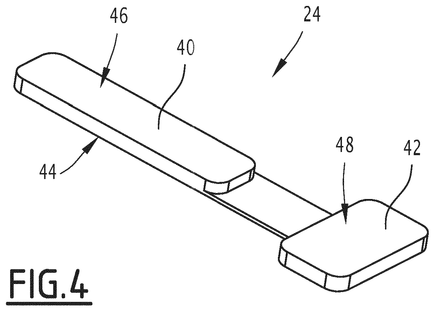

Dans l'exemple des figures 1 à 5, l'élément de batterie 10 comprend en outre un deuxième faisceau électrochimique 20 disposé à l'intérieur du volume intérieur 16, en regard du premier faisceau électrochimique 18 selon la direction transversale T.

L'élément de batterie 10 comprend en outre un couvercle 22 fixé sur le godet 14 et fermant le volume intérieur 16 et au moins un collecteur de première polarité 24.

Le couvercle 22 définit un espace intérieur 25 en communication avec le volume intérieur 16 du godet 14.

Dans l'exemple illustré, l'élément de batterie 10 comprend en outre un collecteur de deuxième polarité 26.

Comme visible sur les figures 1 et 2, le godet 14 comporte une paroi de fond 28 et une paroi latérale 30 faisant saillie à partir de la paroi de fond 28 pour délimiter le volume intérieur 16. Dans l'exemple illustré, le godet 14 est de forme parallélépipédique, en particulier parallélépipédique rectangle. Le volume intérieur 16 du godet 14 s'ouvre à travers une ouverture supérieure 32 d'accès au volume intérieur 16 qui débouche vers le haut, lorsque la paroi de fond 28 est posée sur un support horizontal. L'ouverture supérieure 32 s'étend sensiblement dans un premier plan P1.

Le godet 14 est par exemple en plastique, en particulier un plastique qui supporte l'attaque chimique résultante de l'électrolyte contenu dans le godet 14, par exemple en polypropylène (PP), en polysulfure de phénylène (PPS), en polytéréphtalate d'éthylène (PET), en polytéréphtalate de butylène (PBT) ou en polyéthylène (PE). En variante le godet 14 est en aluminium.

Chaque faisceau électrochimique 18, 20 est reçu dans le volume intérieur 16. De préférence, le volume occupé par le ou les faisceaux électrochimiques 18, 20 est supérieur à 70% du volume intérieur 16. Dans l'élément de batterie selon l'invention, ce volume est entre 8% et 12% supérieur au volume occupé par le ou les faisceaux électrochimiques d'un élément de batterie de l'état de la technique présentant un godet de mêmes dimensions.

Chaque faisceau électrochimique 18, 20 comporte au moins un empilement, de préférence une pluralité d'empilements successifs empilés selon la direction d'empilement E. Chaque empilement comporte une électrode de première polarité (non représentée), par exemple une électrode positive, une électrode de deuxième polarité (non représentée), par exemple une électrode négative, et un séparateur (non représenté) interposé entre les électrodes.

Chaque faisceau électrochimique 18, 20 est en outre reçu dans un électrolyte, présent dans le volume intérieur 16 pour imprégner les électrodes et le séparateur.

L'électrode de première polarité comporte un support plan, une couche comportant la matière active couvrant le support et une languette de connexion électrique 34 faisant saillie vers le haut selon la direction d'élévation Z par rapport au support pour permettre la connexion électrique du faisceau électrochimique 18, 20.

Le support est de préférence métallique. Il constitue un collecteur de courant. Il est par exemple formé d'un feuillard, notamment d'un feuillard mince présentant une épaisseur inférieure à 20 µm. Le support est par exemple réalisé en aluminium.

Le support présente par exemple un contour sensiblement polygonal, notamment un contour rectangle. Il s'étend selon la direction d'élévation Z entre un bord inférieur et un bord supérieur. Il s'étend selon la direction longitudinale L entre un premier bord latéral situé au voisinage de la languette de connexion électrique 34, et un deuxième bord latéral, située à l'opposé de la languette de connexion électrique 34.

La couche comportant la matière active couvre la totalité d'au moins une face du support, verticalement entre le bord inférieur et le bord supérieur, et horizontalement entre le premier bord latéral et le deuxième bord latéral. Elle ne couvre pas la languette 34 qui reste dénudée.

Le séparateur est formé d'une feuille, préférentiellement d'une feuille isolante électrique. Elle est par exemple formée d'une feuille de matériau polymère, notamment d'une feuille de polyoléfine qui est de préférence perméable aux ions lithium.

L'épaisseur du séparateur est par exemple inférieure à 25 µm. Avantageusement, les bords du séparateur font saillie au-delà des bords des supports des électrodes.

L'électrolyte est par exemple liquide. En variante, l'électrolyte est sous forme d'un solide ou d'un gel.

Selon l'invention, chacun des collecteurs de première polarité 24 et de deuxième polarité 26 est solidaire du couvercle 22.

Chaque collecteur 24, 26 définit respectivement au moins une première surface de soudage 36 des languettes de connexion électrique 34 des électrodes de même polarité du premier faisceau électrochimique 18. Dans l'exemple illustré, chaque collecteur 24, 26 définit en outre une deuxième surface de soudage 38 des languettes de connexion électrique des électrodes de même polarité du deuxième faisceau électrochimique 20.

La ou les surfaces de soudage 36, 38 de chacun des collecteurs 24, 26 sont situées à l'écart du volume intérieur 16 du godet 14. Plus particulièrement, la ou les surfaces de soudage 36, 38 sont situées à l'intérieur de l'espace intérieur 25 du couvercle 22.

Chaque collecteur 24, 26 s'étend principalement selon la direction longitudinale L. Le collecteur 24, 26 comprend une portion de connexion 40 des languettes 34 et une borne de raccordement 42 reliée à la portion de connexion 40. De préférence, la portion de connexion 40 et la borne de raccordement 42 sont venues de matière entre elles. Dit autrement, la portion de connexion 40 et la borne de raccordement 42 sont faits d'un seul tenant et d'un même matériau.

La portion de connexion 40 définit la ou les surfaces de soudage 36, 38. Dans le premier mode de réalisation illustré sur les figures 1 à 5, la portion de connexion 40 a la forme d'un barreau parallélépipédique s'étendant principalement selon la direction longitudinale L. La portion de connexion 40 s'étend entre une face inférieure 44 et une face supérieure 46 selon la direction d'élévation Z.

La face supérieure 46 est orientée à l'opposé du volume intérieur 16. Elle définit chaque surface de soudage 36, 38 des languettes de connexion électrique 34. La face supérieure 46, et ainsi la ou les surfaces de soudage 36, 38, s'étend par exemple dans un deuxième plan P2 sensiblement parallèle au premier plan P1 dans lequel s'étend l'ouverture supérieure 32 du godet 14. La face supérieure 46 est située à l'opposé de la face inférieure 44. Elle est sensiblement parallèle à la face inférieure 44.

La face inférieure 44 s'étend sensiblement dans un plan P3. Elle est orientée vers le volume intérieur 16 du godet 14. Elle est par exemple séparée du bord supérieur du support des électrodes par une distance prise selon la direction d'élévation Z comprise entre 1 mm et 4 mm.

Chacun des collecteurs 24, 26 est métallique et conducteur électriquement. Il est par exemple en aluminium, en cuivre ou en bi-matière cuivre/aluminium.

Chaque languette de connexion électrique 34 fait saillie vers le haut à partir du bord supérieur du support de l'électrode. Dans cet exemple, chaque languette 34 est formée en étant venue de matière avec le support. Elle est raccordée à sa base le long de ses côtés au bord supérieur du support.

Les languettes de connexion électrique 34 des électrodes de première polarité du premier faisceau électrochimique 18 sont soudées sur la première surface de soudage 36 du collecteur de première polarité 24. Les languettes de connexion électrique 34 des électrodes de première polarité du deuxième faisceau électrochimique 20 sont soudées sur la deuxième surface de soudage 38 du collecteur de première polarité 24.

De manière similaire, les languettes de connexion électrique 34 des électrodes de deuxième polarité du premier faisceau électrochimique 18 sont soudées sur la première surface de soudage 36 du collecteur de deuxième polarité 26. Les languettes de connexion électrique 34 des électrodes de deuxième polarité du deuxième faisceau électrochimique 20 sont soudées sur la deuxième surface de soudage 38 du collecteur de deuxième polarité 26.

De préférence, les languettes 34 des électrodes de même polarité de chaque empilement d'un même faisceau 18, 20 sont jointes les unes aux autres, et sont pliées avant d'être soudées sur la surface de soudage 36, 38.

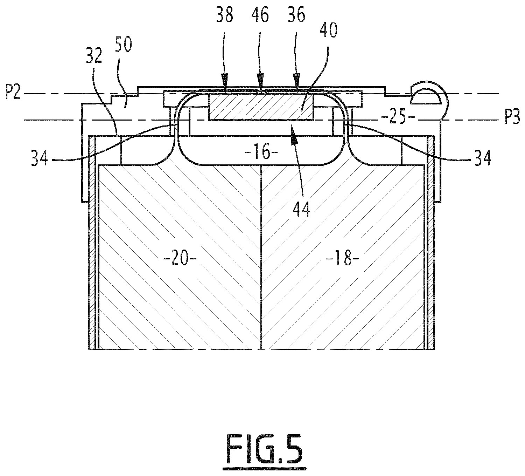

Comme visible en particulier sur la figure 5, dans un plan transversal sensiblement perpendiculaire aux supports, le pliage des languettes de connexion électrique 34 présente une forme incurvée.

Les languettes de connexion électrique 34 des électrodes de première polarité du premier faisceau électrochimique 18 sont pliées vers la portion de connexion 40 du collecteur de première polarité 24, et plus particulièrement vers la première surface de soudage 36. De la même manière, les languettes de connexion électrique 34 des électrodes de première polarité du deuxième faisceau électrochimique 20 sont pliées vers la portion de connexion 40 du collecteur de première polarité 24, et plus particulièrement vers la deuxième surface de soudage 38. Les languettes 34 du premier faisceau électrochimique 18 et les languettes 34 du deuxième faisceau électrochimiques 20 sont situées en regard les unes des autres selon la direction transversale T.

La borne de raccordement 42 définit au moins une surface libre 48 orientée à l'opposé du volume intérieur 16 du godet 14. La borne de raccordement 42 permet la récupération de la puissance électrique de l'élément de batterie 10 et permet le raccordement des éléments de batteries 10 entre eux. La surface libre 48 est par exemple plane comme illustré sur les figures 1 et 2 pour permettre un raccordement des éléments de batterie par soudage. En variante (non représenté), la borne de raccordement 42 définit un logement taraudé ou comprend un insert destiné au raccordement des éléments de batterie 10 par vissage.

La borne de raccordement 42 s'étend par exemple en saillie depuis une surface supérieure du couvercle 22 à l'opposé du volume intérieur 16 du godet 14.

Le couvercle 22 est de préférence soudé sur le godet 14 pour fermer le volume intérieur 16.

Selon l'invention, le couvercle 22 comprend une partie supérieure 50 délimitant au moins une première ouverture traversante 52.

La première ouverture 52 est située en regard de la première surface de soudage 36 selon la direction d'élévation Z.

Dans l'exemple illustré, la partie supérieure 50 du couvercle 22 définit en outre une deuxième ouverture traversante 56 située en regard de la deuxième surface de soudage 38 du collecteur de deuxième polarité 26 selon la direction d'élévation Z.

Chaque ouverture traversante 52, 56 permet un accès à la surface de soudage 36, 38 correspondante facilitant ainsi le soudage des languettes de connexion électrique 34 sur la surface de soudage 36, 38.

La partie supérieure 50 du couvercle 22 est de préférence en plastique, par exemple en polypropylène (PP), en polysulfure de phénylène (PPS), en polytéréphtalate d'éthylène (PET), en polytéréphtalate de butylène (PBT) ou en polyéthylène (PE).

Avantageusement, chacun des collecteurs 24, 26 est solidaire de la partie supérieure 50 du couvercle 22. De préférence, la partie supérieure 50 du couvercle 22 est surmoulée sur les collecteurs 24, 26. Par « surmoulée », on entend que la partie supérieure 50 faite d'une résine thermoplastique ou thermodurcissable est injectée au contact avec les collecteurs 24, 26 préalablement positionnés dans l'outil d'injection.

Selon l'invention, l'élément de batterie 10 comprend un dispositif d'étanchéité 54 destiné à être fixé sur la partie supérieure 50 du couvercle 22 de manière étanche et à fermer au moins la première ouverture 52.

Dans le premier mode de réalisation, le dispositif d'étanchéité 54 comprend un premier volet d'étanchéité 58 et un deuxième volet d'étanchéité 60 destinés à être fixés sur la partie supérieure 50 du couvercle 22 et à fermer de manière étanche respectivement la première ouverture traversante 52 et la deuxième ouverture traversante 56.

Chaque volet d'étanchéité 58, 60 est déplaçable par rapport à la partie supérieure 50 du couvercle 22 entre une position ouverte (figure 1) dans laquelle le volet d'étanchéité 58, 60 est disposé à l'écart de l'ouverture traversante 52, 56, et une position fermée (figure 2) dans laquelle le volet d'étanchéité 58, 60 ferme l'ouverture traversante 52, 56 de manière étanche.

Chaque volet d'étanchéité 58, 60 est par exemple relié à la partie supérieure 50 du couvercle 22 par un bord extérieur 62. Chaque volet d'étanchéité 58, 60 est mobile en rotation, entre la position ouverte et la position fermée, par rapport à la partie supérieure 50 du couvercle 22 autour d'un axe de rotation R sensiblement parallèle à la direction longitudinale L, passant par le bord extérieur 62.

Chaque volet d'étanchéité 58, 60 est par exemple en plastique, par exemple en polypropylène. De préférence, dans la position fermée, le volet d'étanchéité 58, 60 est soudé thermiquement sur la partie supérieure 50 du couvercle 22.

Un procédé de fabrication d'un élément de batterie 10 selon le premier mode de réalisation est maintenant être décrit.

Initialement, les supports des électrodes sont fabriqués en déroulant une bande de feuillard métallique. La bande est enduite d'une encre comportant notamment la matière active pour former chaque électrode. Avantageusement, l'encre contient en outre un liant et un composé conducteur électronique. Le dépôt forme la couche contenant la matière active. Puis, la bande est ensuite emboutie pour obtenir le contour de chacun des supports et des languettes 34 respectives.

Les languettes 34 ne sont pas enduites d'encre comprenant la matière active.

Les empilements sont alors réalisés, en disposant une électrode négative en regard d'une électrode positive, avec l'interposition d'un séparateur. Les empilements sont juxtaposés selon la direction d'empilement E pour former un ou plusieurs faisceaux électrochimiques 18, 20.

Le ou les faisceaux électrochimiques 18, 20 sont ensuite disposés à l'intérieur du volume intérieur 16 du godet 14.

Au sein de chaque faisceau électrochimique 18, 20, les languettes 34 des électrodes de première polarité de chaque empilement sont jointes les unes aux autres par leurs extrémités libres. De la même manière les languettes 34 des électrodes de deuxième polarité de chaque empilement sont jointes les unes aux autres par leurs extrémités libres.

Le ou les collecteurs 24, 26 sont rendus solidaires du couvercle 22 et plus particulièrement de la partie supérieure 50 du couvercle 22. De préférence, la partie supérieure 50 du couvercle 22 est surmoulée sur le ou les collecteurs 24, 26.

Le couvercle 22 est ensuite disposé sur le godet 14 et soudé sur le godet 14, par exemple par soudage laser.

Les languettes de connexion électrique 34 des électrodes de première polarité du ou des faisceaux électrochimiques 18, 20 sont alors soudées sur les surfaces de soudage 36, 38 du collecteur de première polarité 24, par exemple par soudage laser. De manière similaire, les languettes de connexion électrique 34 des électrodes de deuxième polarité du ou des faisceaux électrochimiques 18, 20 sont soudées sur les surfaces de soudage 36, 38 du collecteur de deuxième polarité 26.

Le soudage s'effectue au travers des première et deuxième ouvertures traversantes 52, 56 de la partie supérieure 50 du couvercle 22.

Enfin, le dispositif d'étanchéité 54 est fixé sur la partie supérieure 50 du couvercle 22 pour fermer les ouvertures traversantes 52, 56 de manière étanche.

Plus particulièrement, dans le premier mode de réalisation, chaque volet d'étanchéité 58, 60 est déplacé de la position ouverte vers la position fermée puis soudée thermiquement sur la partie supérieure 50 du couvercle 22 de sorte à fermer les ouvertures traversantes 52, 56 de manière étanche.

Préférentiellement, avant la fermeture des volets d'étanchéité 58, 60, le volume intérieur 16 du godet 14 est rempli avec l'électrolyte par la première ouverture 52 et/ou la deuxième ouverture 56.

Ainsi, l'élément de batterie 10 selon l'invention est particulièrement avantageux. En effet, la fabrication de l'élément de batterie 10 est facilitée puisque le nombre d'éléments qui composent l'élément de batterie 10 est réduit. En particulier, les languettes 34 des électrodes de première polarité sont soudées directement sur le collecteur de première polarité 24 sans qu'un connecteur intermédiaire ne soit nécessaire. Le fait de déporter la soudure entre le collecteur 24 et les languettes de connexion électrique 34 à l'extérieur du godet 14 permet d'augmenter les dimensions des supports des électrodes présentes dans le volume intérieur 16 du godet 14 et par conséquent, d'augmenter la capacité de l'élément de batterie 10. La fabrication de l'élément de batterie 10 est facilitée puisque les soudures des languettes de connexion électrique 34 sur le collecteur 24 sont réalisées après la mise en place du couvercle 22 sur le godet 14. Le risque de courts-circuits est également réduit car le rayon de pliage des languettes de connexion électrique 34 est augmenté.

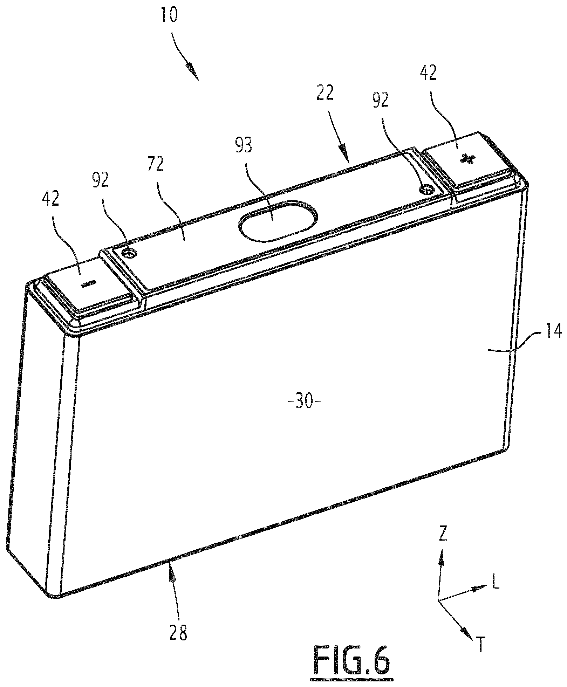

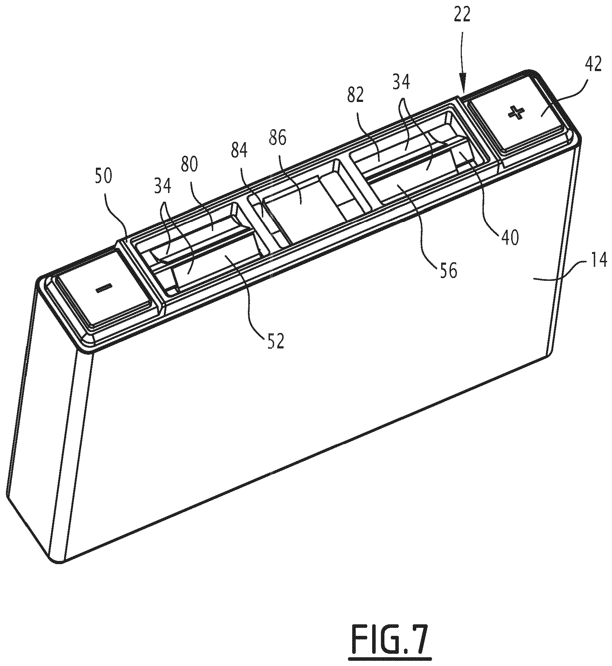

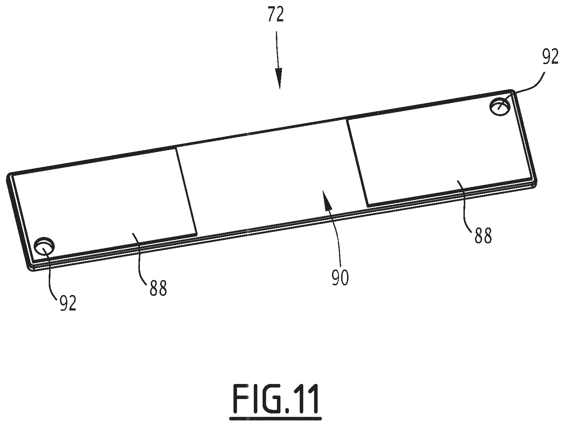

Un deuxième mode de réalisation de l'invention est décrit en référence aux figures 6à 11. Ce mode de réalisation sera décrit par différences par rapport au premier mode de réalisation.

Dans le deuxième mode de réalisation, le godet 14 est en métal, de préférence en aluminium.

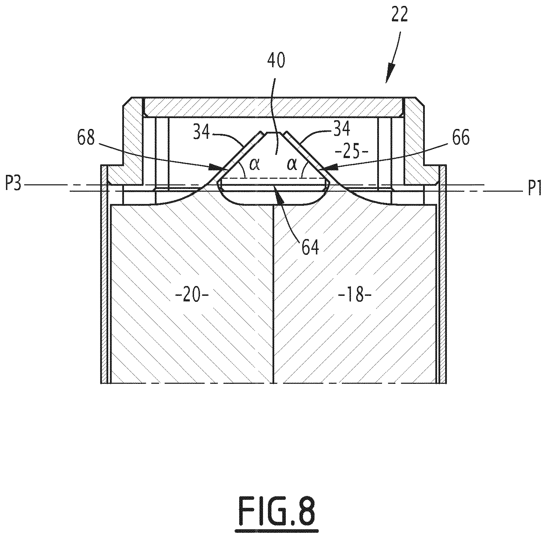

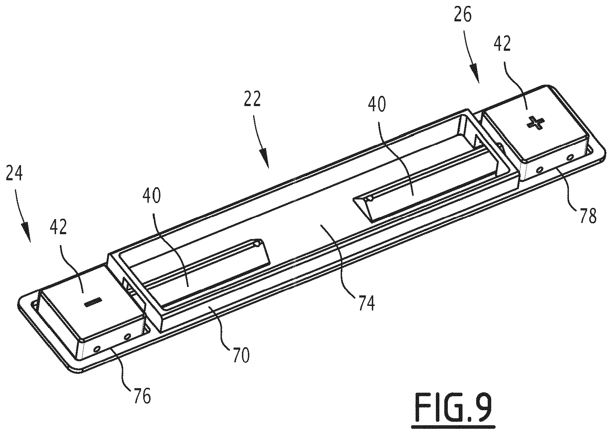

Comme visible en particulier sur les figures 8 et 9, la portion de connexion 40 de chacun des collecteurs de première polarité et de deuxième polarité 24, 26 définit une face inférieure 64, orientée vers le volume intérieur 16 du godet 14, sensiblement parallèle au premier plan P1, une première face latérale 66 et une deuxième face latérale 68 reliées à la face inférieure 64. Les faces latérales 66, 68 sont disposées de part et d'autre de la face inférieure 64 selon la direction transversale T. De préférence, chacune des face latérales 66, 68 forme avec la face inférieure 64 un angle α compris entre 30° et 60°, avantageusement sensiblement égal à 45°. Ceci permet de limiter au minimum le pliage des languettes de connexion électrique 34 évitant une rupture mécanique des languettes de connexion électrique 34 lors de l'étape de soudage sur le collecteur 24, 26 et limitant les risques de courts-circuits.

La première face latérale 66 définit la première surface de soudage 36. La deuxième face latérale 68 définit la deuxième surface de soudage 38.

Il est entendu que le premier mode de réalisation peut, en variante, comprendre un collecteur 24, 26 avec une portion de connexion 40 présentant ces mêmes caractéristiques.

Les figures 9, 10, 11 illustrent les différents éléments du couvercle 22 de l'élément de batterie 10 du deuxième mode de réalisation.

Le couvercle 22 comprend, en plus de la partie supérieure 50, une structure de base 70 sur laquelle est fixée la partie supérieure 50.

La structure de base 70 est de préférence métallique, par exemple en aluminium. Elle définit un logement central 74, un premier logement latéral 76 et un deuxième logement latéral 78 disposés de part et d'autre du logement central 74 selon la direction longitudinale L.

Le premier logement latéral 76 et le deuxième logement latéral 78 reçoivent respectivement au moins en partie la borne de raccordement 42 du collecteur de première polarité 24 et la borne de raccordement 42 du collecteur de deuxième polarité 26. Le logement central 74 reçoit les portions de connexion 40 des collecteurs de première polarité et de deuxième polarité 24, 26.

La partie supérieure 50 du couvercle 22 est solidaire des collecteurs de première polarité et deuxième polarité 24, 26 et de la structure de base 70.

De préférence, la partie supérieure 50 du couvercle 22 est surmoulée sur les collecteurs 24, 26 et sur la structure de base 70. Par « surmoulée », on entend que la partie supérieure 50 faite d'une résine thermoplastique ou thermodurcissable est injectée au contact avec les collecteurs 24, 26 et la structure de base 70 préalablement positionnés dans l'outil d'injection.

La partie supérieure 50 du couvercle 22 délimite à l'intérieur du logement central 74 un premier logement 80, un deuxième logement 82 et un troisième logement 84 entre le premier logement 80 et le deuxième logement 82. Chacun des logements 80, 82, 84 est en communication avec le volume intérieur 16 du godet 14.

Le premier logement 80 s'ouvre vers le haut à travers la première ouverture traversante 52. Le deuxième logement 82 s'ouvre vers le haut à travers la deuxième ouverture traversante 56.

La portion de connexion 40 du collecteur de première polarité 24 est située dans le premier logement 80. La portion de connexion 40 du collecteur de deuxième polarité 26 est située dans le deuxième logement 82.

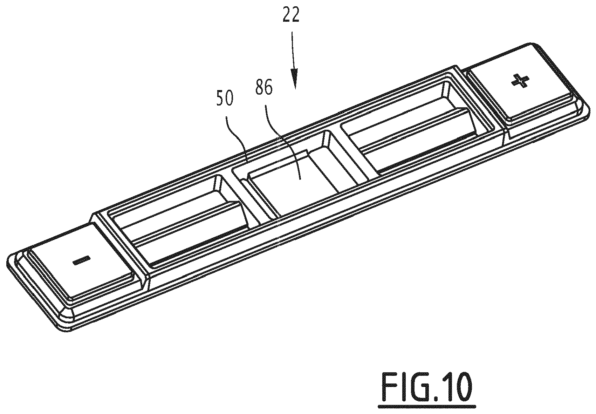

Avantageusement, le couvercle 22 comprend en outre un organe de butée 86 en appui sur le ou les faisceaux électrochimiques 18, 20. Par exemple, comme visible sur la figure 10, l'organe de butée 86 est formé par une plaque s'étendant en saillie depuis une face inférieure de la partie supérieure 50 du couvercle 22 vers le volume intérieur 16 du godet 14. L'organe de butée 86 est par exemple disposé en regard du troisième logement 84 selon la direction d'élévation Z. L'organe de butée 86 définit de préférence une face inférieure s'étendant dans un plan sensiblement parallèle au premier plan P1 en appui sur le ou les faisceaux électrochimiques 18, 20. Ceci permet d'éviter une éjection d'une partie des empilements en cas de surpression à l'intérieur du godet 14.

Dans le deuxième mode de réalisation, le dispositif d'étanchéité 54 comprend un capot supérieur 72 fixé sur le couvercle 22 et plus particulièrement sur la structure de base 70. Le capot supérieur 72 est fixé par exemple par soudage. Il ferme chacun des premier, deuxième et troisième logements 80, 82, 84 et ainsi ferme la première ouverture traversante 52 et la deuxième ouverture traversante 56 de manière étanche.

En variante, le capot supérieur 72 est fixé sur la partie supérieure 50 du couvercle 22.

Le capot supérieur 72 est de préférence métallique, par exemple en aluminium.

De préférence, le dispositif d'étanchéité 54 comprend en outre au moins une couche de matériau isolant électrique 88 fixée sur une face inférieure 90 du capot supérieur 72 orientée vers le volume intérieur 16 du godet 14. En particulier dans l'exemple illustré, le dispositif d'étanchéité 54 comprend une première couche de matériau isolant électrique 88 fixée sur la face inférieure 90 du capot supérieur 72 en regard de la première ouverture traversante 52 selon la direction d'élévation Z, et une deuxième couche de matériau isolant électrique 88 fixée sur la face inférieure 90 du capot supérieur 72 en regard de la deuxième ouverture traversante 56 selon la direction d'élévation Z.

Le matériau isolant électrique est avantageusement du polysulfure de phénylène (PPS). En variante, il est fait de polypropylène (PP), de polytéréphtalate d'éthylène (PET), de polytéréphtalate de butylène (PBT) ou de polyéthylène (PE).

Le matériau isolant permet d'isoler les portions de connexion 40 des collecteurs 24, 26 du capot supérieur 72 et d'éviter ainsi tout court-circuit entre les deux collecteurs 24, 26.

Avantageusement encore, le capot supérieur 72 définit au moins deux orifices traversants 92 en communication avec le volume intérieur 16 du godet 14.

Ces orifices 92 facilitent le remplissage du godet 14 et l'imprégnation des empilements. Par exemple, ils permettent d'effectuer le remplissage au niveau de deux endroits distincts de l'élément de batterie 10 ou d'effectuer le remplissage par un orifice 92 et de tirer au vide par l'autre orifice 92.

Avantageusement encore, le capot supérieur 72 comprend une soupape 93 destinée à évacuer une surpression de fluide hors du volume intérieur 16 du godet 14.

Un procédé de fabrication d'un élément de batterie 10 selon le deuxième mode de réalisation est maintenant décrit. Seules les différences avec le procédé de fabrication du premier mode de réalisation seront décrites ici.

Une fois les languettes de connexion électrique 34 soudées sur les collecteurs 24, 26, on vient positionner le capot supérieur 72 sur la structure de base 70 du couvercle 22 et le souder pour fermer la première ouverture traversante 52 et la deuxième ouverture traversante 56 de manière étanche. En particulier, le capot supérieur 72 ferme en outre le troisième logement 84 de manière étanche.

De préférence, le godet 14 est rempli d'électrolyte en utilisant les deux orifices traversants 92 du capot supérieur 72 qui sont ensuite bouchés.

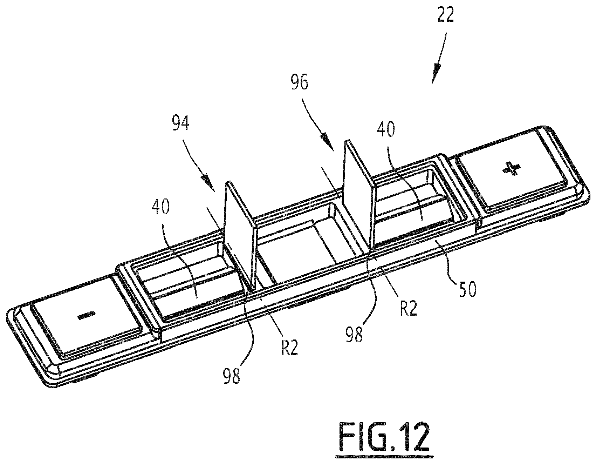

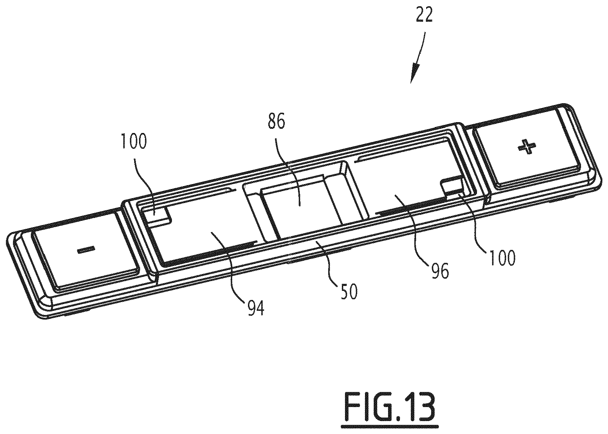

Un troisième mode de réalisation d'un élément de batterie 10 selon l'invention est illustré sur les figures 12 et 13. Ce mode de réalisation est décrit par différences par rapport au deuxième mode de réalisation.

Dans ce mode de réalisation, le dispositif d'étanchéité 54 ne comprend pas de couches de matériau isolant électrique 88.

Le couvercle comprend une première languette isolante 94 et une deuxième languette isolante 96. La première languette isolante 94 est déplaçable par rapport à la partie supérieure 50 du couvercle 22 entre une première position ouverte (figure 12) dans laquelle la première languette isolante 94 est située à l'écart de la première ouverture 52, et une position fermée (figure 13) dans laquelle la première languette isolante 94 s'étend en regard de la première ouverture 52 selon la direction d'élévation Z. De la même manière, la deuxième languette isolante 96 est déplaçable par rapport à la partie supérieure 50 du couvercle 22 entre une première position ouverte (figure 12) dans laquelle la deuxième languette isolante 96 est située à l'écart de la deuxième ouverture 56, et une position fermée (figure 13) dans laquelle la deuxième languette isolante 96 s'étend en regard de la deuxième ouverture 56 selon la direction d'élévation Z. Les languettes isolantes 94, 96 ont la même fonction que les couches de matériau isolante électrique 88. Elles permettent, en position fermée, d'isoler électriquement les portions de connexions 40 du capot supérieur 72.

De préférence, chaque languette isolante 94, 96 est mobile en rotation par rapport à la partie supérieure 50 du couvercle 22 entre la position ouverte et la position fermée par rapport à un axe de rotation R2 sensiblement parallèle à la direction transversale T. La languette isolante 94, 96 est par exemple reliée à la partie supérieure 50 du couvercle 22 par une charnière.

En variante, la languette isolante 94, 96 est venue de matière avec la partie supérieure 50 du couvercle 22. Elle est reliée à la partie supérieure 50 du couvercle 22 par une portion de liaison 98 adaptée pour permettre le pliage de la languette isolante 94, 96 de la position ouverte vers la position fermée. Par exemple, la portion de liaison 98 présente une épaisseur prise selon la direction d'élévation Z amincie par rapport à l'épaisseur de la languette isolante 94, 96 et de la région de la partie supérieure 50 du couvercle 22 à laquelle elle est reliée.

De préférence, chaque languette isolante 94, 96 définit un passage 100, ici une encoche, disposé en regard de l'orifice traversant 92 du capot supérieur 72 pour permettre le remplissage du volume intérieur 16 du godet 14.

Lors de la fabrication de l'élément de batterie 10, avant de fixer le capot supérieur 72, les languettes isolantes 94, 96 sont déplacées de la position ouverte vers la position fermée pour assurer une isolation électrique entre le capot supérieur 72 et les portions de connexion 40 des collecteurs 24, 26.

En variante, pour le deuxième et le troisième mode de réalisation, l'élément de batterie 10 comprend en outre un premier joint d'étanchéité (non représenté) disposé en la borne de raccordement 42 du collecteur de première polarité 24 et la structure de base 70, et un deuxième joint d'étanchéité (non représenté) interposé entre la borne de raccordement 42 du collecteur de deuxième polarité 26 et la structure de base 70. Le premier joint d'étanchéité et le deuxième joint d'étanchéité sont par exemple en élastomère.

Le premier joint d'étanchéité et le deuxième joint d'étanchéité sont ainsi comprimés dans le moule qui sert à surmouler le couvercle 22. En particulier, la partie supérieure 50 du couvercle 22 surmoulée emprisonne le premier joint d'étanchéité et le deuxième joint d'étanchéité contre les pièces en aluminium, i.e. les bornes de raccordement 42 et la structure de base 70, pour assurer une bonne étanchéité du couvercle 22.

## Revendications

1. Elément de batterie (10) comprenant :
- un godet (14) délimitant un volume intérieur (16) et une ouverture supérieure (32) d'accès au volume intérieur (16) s'étendant sensiblement dans un premier plan (P1),
- un couvercle (22) fixé sur le godet (14) et fermant le volume intérieur (16),
- au moins un premier faisceau électrochimique (18) reçu au moins en partie dans le volume intérieur (16), le premier faisceau électrochimique (18) comprenant une pluralité d'empilements, chaque empilement comprenant une électrode de première polarité, une électrode de deuxième polarité et un séparateur interposé entre l'électrode de première polarité et l'électrode de deuxième polarité, chacune des électrodes de première polarité et de deuxième polarité comprenant une languette de connexion électrique (34),
- au moins un collecteur de première polarité (24),
**caractérisé en ce que** le collecteur de première polarité (24) est solidaire du couvercle (22) et définit au moins une première surface de soudage (36) située à l'écart du volume intérieur (16) du godet (14), les languettes de connexion électrique (34) des électrodes de première polarité étant soudées sur ladite première surface de soudage (36),
le couvercle (22) comprenant une partie supérieure (50) délimitant au moins une première ouverture traversante (52) située en regard de la première surface de soudage (36) selon une direction d'élévation (Z),
l'élément de batterie comprenant en outre un dispositif d'étanchéité (54) fixé sur le couvercle (22) et destiné à fermer la première ouverture traversante (52) de manière étanche.

2. Elément de batterie (10) selon la revendication 2, dans lequel le couvercle (22) définit un espace intérieur (25) en communication avec le volume intérieur (16) du godet (14), la première surface de soudage (36) étant située dans l'espace intérieur (25) du couvercle (22).

3. Elément de batterie (10) selon la revendication 1 ou 2, dans lequel la première surface de soudage (36) s'étend dans un plan sensiblement parallèle au premier plan (P1).

4. Elément de batterie (10) selon la revendication 1 ou 2, dans lequel la première surface de soudage (36) s'étend dans un plan formant un angle avec le premier plan (P1) compris entre 30° et 60°, avantageusement sensiblement égal à 45°.

5. Elément de batterie (10) selon l'une quelconque des revendications 1 à 4, dans lequel le collecteur de première polarité (24) comprend une portion de connexion (40) et une borne de raccordement (42) reliée à la portion de connexion (40), la portion de connexion (40) définissant la première surface de soudage (36), la borne de raccordement (42) définissant au moins une surface libre (48) orientée vers l'extérieur du volume intérieur (16).

6. Elément de batterie (10) selon l'une quelconque des revendications 1 à 5, dans lequel la partie supérieure (50) du couvercle (22) est surmoulée sur le collecteur de première polarité (24).

7. Elément de batterie (10) selon l'une quelconque des revendications 1 à 6, dans lequel le dispositif d'étanchéité (54) comprend au moins un premier volet d'étanchéité (58) monté sur la partie supérieure (50) du couvercle (22), et déplaçable par rapport à la partie supérieure (50) du couvercle (22) entre une position ouverte dans laquelle le premier volet d'étanchéité (54) est disposé à l'écart de la première ouverture traversante (52), et une position fermée dans laquelle le premier volet d'étanchéité (54) ferme la première ouverture traversante (52) de manière étanche.

8. Elément de batterie (10) selon l'une quelconque des revendications 1 à 6, dans lequel le couvercle comprend une structure de base (70) solidaire de la partie supérieure (50) du couvercle (22), le dispositif d'étanchéité (54) comprend un capot supérieur (72) fixé de manière étanche sur la structure de base (70) et fermant au moins la première ouverture traversante (52).

9. Elément de batterie (10) selon la revendication 8, dans lequel le capot supérieur (72) définit au moins deux orifices traversants (92) en communication avec le volume intérieur (16) du godet (14).

10. Elément de batterie (10) selon la revendication 8 ou 9, dans lequel le dispositif d'étanchéité (54) comprend au moins une première couche de matériau isolant (88) fixée sur une face inférieure (90) du capot supérieur (72) et disposée en regard de la première surface de soudage (36) selon la direction d'élévation (Z).

11. Elément de batterie (10) selon la revendication 8 ou 9, dans lequel le couvercle (22) comprend au moins une première languette isolante (94) déplaçable par rapport à la partie supérieure (50) du couvercle (22) entre une position ouverte dans laquelle la première languette isolante (94) est à l'écart de la première ouverture traversante (52), et une position fermée dans laquelle la première languette isolante (94) est située en regard de la première ouverture traversante (52) selon la direction d'élévation (Z).

12. Elément de batterie (10) selon l'une quelconque des revendications 1 à 11, dans lequel le couvercle (22) comprend un organe de butée (86) en appui sur le premier faisceau électrochimique (18).

13. Elément de batterie (10) selon l'une quelconque des revendications 1 à 12, dans lequel l'élément de batterie (10) comprend un collecteur de deuxième polarité (26), le collecteur de première polarité (24) étant solidaire du couvercle (22) et définissant au moins une première surface de soudage (36) située à l'écart du volume intérieur (16) du godet (14), les languettes de connexion électrique (34) des électrodes de deuxième polarité étant soudées sur ladite première surface de soudage (36).

14. Procédé de fabrication d'un élément de batterie (10) selon l'une quelconque des revendications 1 à 13, le procédé comprenant :
- disposer le premier faisceau électrochimique (18) à l'intérieur du volume intérieur (16) du godet (14),
- fixer le collecteur de première polarité (24) sur la partie supérieure (50) du couvercle (22),
- souder la partie supérieure du couvercle (50) sur le godet (14),
- souder les languettes de connexion électrique (34) des électrodes de première polarité sur la première surface de soudage (36) du collecteur de première polarité (24),
- fixer le dispositif d'étanchéité (54) sur le couvercle (22) pour fermer la première ouverture traversante (52) de manière étanche.

## Patentansprüche

1. Batteriezelle (10), umfassend:
- ein Gehäuse (14), das ein Innenvolumen (16) begrenzt und eine obere Öffnung (32) für den Zugang zu dem Innenvolumen (16), die sich im Wesentlichen in einer ersten Ebene (P1) erstreckt,
- einen Deckel (22), der an dem Gehäuse (14) befestigt ist und das Innenvolumen (16) verschließt,
- mindestens ein erstes elektrochemisches Bündel (18), das mindestens teilweise in dem Innenvolumen (16) aufgenommen ist, das erste elektrochemische Bündel (18) umfassend eine Vielzahl von Stapeln, jeder Stapel umfassend eine Elektrode erster Polarität, eine Elektrode zweiter Polarität und einen Separator, der zwischen die Elektrode erster Polarität und die Elektrode zweiter Polarität eingefügt ist, wobei jede der Elektroden erster Polarität und zweiter Polarität eine elektrische Verbindungslasche (34) umfasst,
- mindestens einen Kollektor der ersten Polarität (24),
**dadurch gekennzeichnet, dass** der Kollektor der ersten Polarität (24) fest mit dem Deckel (22) verbunden ist und mindestens eine erste Lötfläche (36) definiert, die von dem Innenvolumen (16) des Gehäuses (14) beabstandet ist, die elektrischen Verbindungslaschen (34) der Elektroden der ersten Polarität an die erste Lötfläche (36) angelötet sind, der Deckel (22) umfassend einen oberen Abschnitt (50), der mindestens eine erste Durchgangsöffnung (52) begrenzt, die sich in einer Erhebungsrichtung (Z) gegenüber der ersten Lötfläche (36) befindet,
die Batteriezelle ferner umfassend eine Dichtungsvorrichtung (54) umfasst, die an dem Deckel (22) befestigt ist und dazu dient, die erste Durchgangsöffnung (52) abdichtend zu verschließen.

2. Batteriezelle (10) nach Anspruch 2, wobei der Deckel (22) einen Innenraum (25) definiert, der mit dem Innenvolumen (16) des Gehäuses (14) in Verbindung ist, wobei die erste Lötfläche (36) in dem Innenraum (25) des Deckels (22) angeordnet ist.

3. Batteriezelle (10) nach Anspruch 1 oder 2, wobei sich die erste Lötfläche (36) in einer Ebene erstreckt, die im Wesentlichen parallel zu der ersten Ebene (P1) ist.

4. Batteriezelle (10) nach Anspruch 1 oder 2, wobei sich die erste Lötfläche (36) in einer Ebene erstreckt, die mit der ersten Ebene (P1) einen Winkel zwischen 30° und 60°, vorteilhafterweise im Wesentlichen gleich 45°, einschließt.

5. Batteriezelle (10) nach einem der Ansprüche 1 bis 4, wobei der Kollektor (24) der ersten Polarität einen Verbindungsabschnitt (40) und einen mit dem Verbindungsabschnitt (40) verbundenen Verbindungsanschluss (42) umfasst, wobei der Verbindungsabschnitt (40) die erste Lötoberfläche (36) definiert, wobei der Verbindungsanschluss (42) mindestens eine freie Oberfläche (48) definiert, die aus dem Innenvolumen (16) nach außen gerichtet ist.

6. Batteriezelle (10) nach einem der Ansprüche 1 bis 5, wobei der obere Abschnitt (50) der Abdeckung (22) auf den Kollektor der ersten Polarität (24) aufgeformt ist.

7. Batteriezelle (10) nach einem der Ansprüche 1 bis 6, wobei die Dichtungsvorrichtung (54) mindestens eine erste Dichtungsklappe (58) umfasst, die an dem oberen Abschnitt (50) des Deckels (22) montiert ist, und in Bezug auf den oberen Abschnitt (50) des Deckels (22) zwischen einer offenen Position, in der die erste Dichtungsklappe (54) beabstandet von der ersten Durchgangsöffnung (52) angeordnet ist, und einer geschlossenen Position, in der die erste Dichtungsklappe (54) die erste Durchgangsöffnung (52) abdichtend verschließt, bewegbar ist.

8. Batteriezelle (10) nach einem der Ansprüche 1 bis 6, wobei der Deckel eine Basisstruktur (70) umfasst, die fest mit dem oberen Abschnitt (50) des Deckels (22) verbunden ist, die Dichtungsvorrichtung (54) eine obere Abdeckung (72) umfasst, die dicht an der Grundstruktur (70) befestigt ist und mindestens die erste Durchgangsöffnung (52) verschließt.

9. Batteriezelle (10) nach Anspruch 8, wobei die obere Abdeckung (72) mindestens zwei Durchgangsöffnungen (92) definiert, die mit dem Innenvolumen (16) des Gehäuses (14) in Verbindung sind.

10. Batteriezelle (10) nach Anspruch 8 oder 9, wobei die Dichtungsvorrichtung (54) mindestens eine erste Schicht aus Isoliermaterial (88) umfasst, die an einer Unterseite (90) der oberen Abdeckung (72) befestigt und in der Erhebungsrichtung (Z) gegenüber der ersten Lötfläche (36) angeordnet ist.

11. Batteriezelle (10) nach Anspruch 8 oder 9, wobei der Deckel (22) mindestens eine erste Isolierlasche (94) umfasst, die in Bezug auf den oberen Abschnitt (50) des Deckels (22) zwischen einer offenen Position, in der die erste Isolierlasche (94) von der ersten Durchgangsöffnung (52) beabstandet ist, und einer geschlossenen Position, in der sich die erste Isolierlasche (94) gegenüber der ersten Durchgangsöffnung (52) befindet, entlang der Erhebungsrichtung (Z) bewegbar ist.

12. Batteriezelle (10) nach einem der Ansprüche 1 bis 11, wobei der Deckel (22) ein Anschlagelement (86) in Anlage an dem ersten elektrochemischen Bündel (18) umfasst.

13. Batteriezelle (10) nach einem der Ansprüche 1 bis 12, wobei die Batteriezelle (10) einen Kollektor (26) der zweiten Polarität umfasst, wobei der Kollektor (24) der ersten Polarität fest mit dem Deckel (22) verbunden ist und mindestens eine erste Lötfläche (36) definiert, die von dem Innenvolumen (16) des Gehäuses (14) beabstandet ist, wobei die elektrischen Verbindungslaschen (34) der Elektroden der zweiten Polarität auf die erste Lötfläche (36) gelötet sind.

14. Verfahren zur Herstellung einer Batteriezelle (10) nach einem der Ansprüche 1 bis 13, das Verfahren umfassend:
- Anordnen des ersten elektrochemischen Bündels (18) innerhalb des Innenvolumens (16) des Gehäuses (14),
- Befestigen des Kollektors der ersten Polarität (24) an der Oberseite (50) des Deckels (22),
- Löten des oberen Abschnitts des Deckels (50) an das Gehäuse (14),
- Löten der elektrischen Verbindungslaschen (34) der Elektroden der ersten Polarität an die erste Lötfläche (36) des Kollektors der ersten Polarität (24),
- Befestigen der Dichtungsvorrichtung (54) an dem Deckel (22), um die erste Durchgangsöffnung (52) dicht zu verschließen.

## Claims

1. A battery cell (10) comprising:
- a bucket (14) delimiting an internal volume (16) and an upper opening (32) giving access to the internal volume (16) extending substantially in a first plane (P1),
- a cover (22) attached to the bucket (14) and closing the internal volume (16),
- at least one first electrochemical bundle (18) received at least partly in the internal volume (16), the first electrochemical bundle (18) comprising a plurality of stacks, each stack comprising a first polarity electrode, a second polarity electrode and a separator interposed between the first polarity electrode and the second polarity electrode, each of the first polarity and second polarity electrodes comprising an electrical connection tab (34),
- at least one first polarity collector (24),
**characterized in that** the first polarity collector (24) is integral with the cover (22) and defines at least a first welding surface (36) located away from the internal volume (16) of the bucket (14), the electrical connection tabs (34) of the first polarity electrodes being welded to said first welding surface (36),
the cover (22) comprising an upper part (50) delimiting at least a first through opening (52) located facing the first welding surface (36) in a direction of elevation (Z),
the battery cell further comprising a sealing device (54) attached to the cover (22) and designed to close the first through opening (52) in a sealed manner.

2. The battery cell (10) according to claim 2, wherein the cover (22) defines an interior space (25) in communication with the internal volume (16) of the bucket (14), the first welding surface (36) being located in the interior space (25) of the cover (22).

3. The battery cell (10) according to claim 1 or 2, wherein the first welding surface (36) extends in a plane substantially parallel to the first plane (P1).

4. The battery cell (10) according to claim 1 or 2, wherein the first welding surface (36) extends in a plane forming an angle with the first plane (P1) of between 30° and 60°, advantageously substantially equal to 45°.

5. The battery cell (10) according to any one of claims 1 to 4, wherein the first polarity collector (24) comprises a connection portion (40) and a connection terminal (42) connected to the connection portion (40), the connection portion (40) defining the first welding surface (36), the connection terminal (42) defining at least one free surface (48) facing outward from the internal volume (16).

6. The battery cell (10) according to any one of claims 1 to 5, wherein the upper portion (50) of the cover (22) is overmolded onto the first polarity collector (24).

7. The battery cell (10) according to any one of claims 1 to 6, wherein the sealing device (54) comprises at least one first sealing flap (58) mounted on the upper part (50) of the cover (22), and displaceable relative to the upper part (50) of the cover (22) between an open position wherein the first sealing flap (54) is arranged away from the first through opening (52), and a closed position wherein the first sealing flap (54) closes the first through opening (52) in a sealed manner.

8. The battery cell (10) according to any one of claims 1 to 6, wherein the cover comprises a base structure (70) integral with the upper part (50) of the cover (22), the sealing device (54) comprises an upper lid (72) attached in a sealed manner to the base structure (70) and closing at least the first through opening (52).

9. The battery cell (10) according to claim 8, wherein the upper lid (72) defines at least two through openings (92) in communication with the internal volume (16) of the bucket (14).

10. The battery cell (10) according to claim 8 or 9, wherein the sealing device (54) comprises at least one first layer of insulating material (88) attached to a lower face (90) of the upper lid (72) and arranged facing the first welding surface (36) according to the direction of elevation (Z).

11. The battery cell (10) according to claim 8 or 9, wherein the cover (22) comprises at least one first insulating tab (94) displaceable relative to the upper portion (50) of the cover (22) between an open position wherein the first insulating tab (94) is away from the first through opening (52), and a closed position wherein the first insulating tab (94) is located facing the first through opening (52) in the direction of elevation (Z).

12. The battery cell (10) according to any one of claims 1 to 11, wherein the cover (22) comprises a stop member (86) resting on the first electrochemical bundle (18).

13. The battery cell (10) according to any one of claims 1 to 12, wherein the battery cell (10) comprises a second polarity collector (26), the first polarity collector (24) being integral with the cover (22) and defining at least a first welding surface (36) located away from the internal volume (16) of the bucket (14), the electrical connection tabs (34) of the second polarity electrodes being welded to said first welding surface (36).

14. A method for manufacturing a battery cell (10) according to any one of claims 1 to 13, the method comprising:
- arranging the first electrochemical bundle (18) inside the internal volume (16) of the bucket (14),
- attaching the first polarity collector (24) to the upper part (50) of the cover (22),
- welding the upper part (50) of the cover to the bucket (14),
- welding the electrical connection tabs (34) of the first polarity electrodes to the first welding surface (36) of the first polarity collector (24),
- attaching the sealing device (54) to the cover (22) to close the first through-opening (52) in a sealed manner.
